# FASCICULE DE BREVET EUROPEEN

(11) **EP 1 607 292 B1**
(45) Date de publication et mention de la délivrance du brevet: **22.10.2008**
(21) Numéro de dépôt: 04014180.6
(22) Date de dépôt: 18.06.2004
(51) Int. Cl.: B60S 1/04, B60J 10/02, B62D 25/08

(54) **Ensemble de vitrage et d'essuie-glace**
Verbundglasscheibe- und Scheibenwischeranordnung
Glazing and windscreen wiper assembly

(43) Date de publication de la demande: 21.12.2005
(73) Titulaire: AGC Flat Glass Europe SA, 1170 Bruxelles (BE); VALEO SYSTEMES D'ESSUYAGE, 78321 Le Mesnil Saint Denis (FR); Peugeot Citroën Automobiles S.A., 78140 Vélizy Villacoublay (FR)
(72) Inventeur: De Kerchove, Cédric, 6040 Jurnet (BE); Meerman, Christophe, 6040 Jurnet (BE); Eustache, Jean-Pierre, 92160 Anthony (FR); Cathala, Franck, 81170 Saint Martin Laguepie (FR); Jeuffe, Gérard, 78810 Feucherolles (FR); Cahen, Thierry, 92150 Suresnes (FR)
(74) Mandataire: Decamps, Alain René François

(56) Documents cités:
- EP-A- 1 219 513
- EP-A- 1 270 376
- EP-A- 1 298 019
- EP-A- 1 346 903
- WO-A-00/18621
- DE-A- 3 815 442
- FR-A- 2 838 692
- US-A- 4 435 875
- US-A1- 2003 074 761

## Description

La présente invention concerne la fixation d'un ensemble d'essuie-glace d'un véhicule automobile sur le vitrage auquel cet ensemble est associé.

La qualité de l'essuyage des vitrages automobile, est fonction de la disposition des balais d'essuie-glace par rapport à la surface du vitrage. Les formes complexes adoptées le plus souvent par les constructeurs nécessitent la mise en oeuvre de mécanismes qui permettent de disposer les balais dans une inclinaison à peu près constante sur toute la surface balayée. Pour parvenir à ce résultat les mécanismes d'entraînement ont été proposés qui comportent un arbre d'entraînement animé en rotation alternée par un moto-réducteur. Cette manière permet d'éviter les mécanismes de cames et bielles qui ne s'accommodent pas aisément des orientations complexes au cours du déplacement des balais.

Ces dispositifs répondent bien aux exigences des vitrages complexes pour autant que le positionnement de l'ensemble d'essuyage vis-à-vis du vitrage soit assuré avec une grande précision.

Dans la pratique antérieure l'ensemble d'entraînement est essentiellement fixé sur les éléments de structure du véhicule, et de son côté, le vitrage est collé sur d'autres éléments de structure. Une telle disposition est présentée notamment par exemple dans WO 00/18621.Cette disposition n'est pas entièrement garante d'un positionnement rigoureux des balais par rapport au vitrage. Par exemple un écart même modeste dans l'inclinaison de l'axe moteur introduit des différences sensibles sur le positionnement du bras et du balai portés directement par l'axe moteur.

D'autres modes de fixation comportent soit le percement du vitrage, mode présenté dans le document cité ci-dessus, soit, comme dans DE 38 15 442 A1, l'insertion du vitrage dans une rainure du support rapporté.

Les constructeurs par ailleurs s'efforcent de réduire le plus possible les opérations de montage sur les lignes de production. Dans ce sens, ils attendent des équipementiers des produits intégrant le plus souvent selon les fonctions mises en oeuvre. De telles intégrations sont habituellement limitées en fonction des spécialisations des équipementiers concernés.

Néanmoins sous la pression des constructeurs, ces limitations doivent être dépassées. Ainsi les producteurs de vitrages associent à leurs produits de plus en plus d'éléments fonctionnels sans rapport immédiat avec les vitrages en question. Par exemple le pare brise des véhicules est le lieu de fixation de rétroviseurs, la lunette arrière est souvent le support de feu "stop", d'antennes de réception radio ou téléphone, le pare-brise sert d'écran pour l'affichage d'informations dans les dispositions dites "tête haute"...

Pour mieux répondre à l'attente des constructeurs d'une part, et résoudre les difficultés évoquées ci-dessus à propos de l'essuyage des vitrages d'autre part, l'invention propose d'associer un vitrage et l'ensemble d'entraînement de l'essuyage de ce vitrage. Cette façon de procéder permet de réaliser une mise en place précise des moyens d'essuyage vis-à-vis du vitrage. Elle permet aussi éventuellement d'effectuer l'association du vitrage et de ces moyens d'entraînement avant de fixer l'ensemble sur la structure du véhicule. La fixation de l'ensemble d'entraînement sur le vitrage peut être rendue aussi précise qu'il est nécessaire à un stade du processus d'assemblage qui met en jeu des techniques parfaitement maîtrisables.

Pour cela cependant les inventeurs ont dû résoudre certaines difficultés de réalisation.

Ainsi, la fixation directe de l'ensemble d'essuyage sur le vitrage, par exemple en faisant en sorte que l'axe moteur soit rigidement positionné dans un trou pratiqué dans le vitrage, et maintenu par un jeu de bagues (paliers, colliers) de serrage, qui peut conduire à un assemblage précis, peut être mis en oeuvre dans certaines réalisations comme l'essuyage des lunettes arrière des véhicules. Mais ce mode ne convient pas pour les vitrages tels que les pare-brise pour diverses raisons. Par exemple la réglementation impose que tout élément proéminent sur le profil à l'avant du véhicule puisse se rompre sous un effort limité pour éviter lors d'un choc avec un piéton projeté sur lesdits éléments, le risque d'aggravation des lésions causées par ce choc. En conséquence tout élément faisant saillie sur ce profil doit, soit offrir lui même une résistance limitée, soit être fixé sur un support présentant cette particularité. Les mécanismes d'entraînement qui supportent des efforts en torsion relativement importants ne peuvent simultanément offrir la "fragilité" requise. La fixation dans le vitrage de l'ensemble d'entraînement de la façon indiquée, ne permettrait pas non plus de procurer cette "fragilité" ou au moins cette « déformabilité », le vitrage devant aussi nécessairement offrir une bonne rigidité de structure et une bonne résistance au choc pour prévenir l'éjection des passagers en cas d'accident.

En conséquence les inventeurs se sont orientés vers un assemblage qui puisse conduire en cas de choc de type "piéton", à une désolidarisation du vitrage et de l'ensemble d'entraînement de l'essuyage. Les exigences de fixation à la fois précise dans son agencement, et facilement rompue dans l'éventualité d'un choc, apparaissent contradictoires. L'invention propose des solutions permettant de les satisfaire simultanément.

L'invention répond aux exigences indiquées précédemment, ou au moins à certaines d'entre elles, en proposant de fixer au vitrage au moins un mécanisme d'entraînement d'essuie-glace, par l'intermédiaire d'une platine de fixation sur laquelle le mécanisme d'entraînement est fixé, la platine intermédiaire étant elle-même fixée de manière sensiblement rigide à une partie périphérique du vitrage de préférence par collage, moulage ou encapsulation.

Dans le mode d'assemblage selon l'invention, le fait d'avoir recours à une platine intermédiaire de fixation permet de disposer d'un support de dimension suffisante pour que les efforts portés sur les moyens de fixation au vitrage ne risquent pas de déformer ces moyens, et par suite, de compromettre un bon positionnement des essuie-glace vis-à-vis du vitrage. Dans cet agencement cependant, les moyens d'entraînement ne sont pas liés au vitrage de manière telle que les forces nécessaires à la désolidarisation d'avec le vitrage en cas de choc soient telles que le vitrage doive être rompu, comme ce serait le cas d'un montage passant par des trous pratiqués dans le vitrage.

Dans la pratique les vitrages sont très fréquemment fixés sur la structure du véhicule par des techniques de collage. L'étanchéité entre la structure et le vitrage est alors assurée par un joint en matériau polymère élastique qui, par mesure de commodité, est le plus généralement livré fixé sur le vitrage. Dans ce cas, la formation et la mise en place du joint peuvent être obtenues par collage d'un profilé de matériau élastique, soit par extrusion directe de ce même profilé sur le bord du vitrage, soit encore par une technique de moulage du matériau sur le bord du verre.

Selon l'invention, la fixation de la platine intermédiaire sur le bord du vitrage est réalisée par collage, moulage ou encapsulation d'au moins une partie de la platine sur le bord du vitrage.

Le collage de la platine sur le bord du vitrage est effectué indépendamment ou non de la mise en oeuvre d'un joint d'étanchéité du vitrage avec la baie dans laquelle ce vitrage est disposé. Il est également indépendant ou non du collage du vitrage sur la carrosserie.

Par rapport à la solution consistant en un collage sur le vitrage, la solution encapsulation ou surmoulage, bien que plus complexe car nécessitant la création d'un moule adapté pour recouvrir de manière adéquate les parties du vitrage en regard de celles de la platine, offre l'avantage de pouvoir conduire à la réalisation en une opération de l'ensemble comprenant non seulement la fixation de la ou des platines sur le bord du vitrage, mais également celle du joint d'étanchéité du vitrage, le tout avec la précision qu'offrent les techniques de moulage.

Pour la mise en place la plus commode pour le constructeur automobile, la fixation de la ou des platines sur le vitrage est effectuée avantageusement dans une opération préalable, et l'ensemble constitué par le vitrage et la ou les platines qui lui sont attachées, est ensuite collé dans la baie et éventuellement d'autres éléments de structure de la carrosserie.

Selon un mode avantageux de l'invention, la platine de fixation intermédiaire est collée, comme le vitrage lui-même, sur la carrosserie. Antérieurement les modes usuels de fixation des moyens d'entraînement des essuie-glace étaient d'ordre mécanique : vis, rivets etc. Cette façon de procéder par collage ne perd pas en rigidité dans la mesure ou ces moyens sont non seulement fixés sur la structure de caisse, mais simultanément sur le bord du vitrage qui lui-même est solidement fixé dans la baie.

Lorsque la platine est pour une part significative entourée par le bord du vitrage sur lequel elle est fixée, le collage supplémentaire de la platine sur la structure du véhicule peut être superflu pour autant que la fixation sur le vitrage assure la rigidité nécessaire.

FR-A-2838692 montre le préambule de la revendication 1.

Pour obtenir une bonne stabilité de la position de l'ensemble d'entraînement par rapport au vitrage sur lequel il est fixé, il est avantageux selon l'invention de disposer l'ensemble d'entraînement sur une platine rigide s'étendant sur une portion suffisante en regard du bord du vitrage sur lequel s'effectue la fixation par l'intermédiaire de cette platine. Une possibilité lorsque plusieurs moyens moteurs d'entraînement sont associés à un même vitrage, est de faire en sorte que ces différents moyens soient fixés sur une même platine. La platine en question s'étend de ce fait sur une partie allongée du bord du vitrage, et facilite une fixation bien stable, que ce soit par collage, moulage ou par encapsulation. La solution préférée, toujours lorsque plusieurs moyens moteurs sont associés au même vitrage, consiste à disposer chaque platine de fixation, portant chacune un moyen moteur, sur un élément structurel intermédiaire lequel est lui-même fixé sur le bord du vitrage.

La, ou les platines, ou l'élément structurel intermédiaire, comporte(nt) avantageusement une partie périphérique plane disposée dans un plan sensiblement parallèle à celui du vitrage auquel elle (ils) est (sont) fixé(s). Cette partie périphérique qui, dans le cas d'un seul moteur par platine constitue une collerette, est le cas échéant mis en recouvrement partiel avec le bord du vitrage, au moins dans les zones de fixation. Cette disposition confère à l'ensemble une grande stabilité, particulièrement lorsque l'assemblage est réalisé par collage entre ces parties qui se font face. Dans les assemblages par moulage ou encapsulation, il est également possible de procéder selon cette même disposition. Néanmoins la structure de ce mode de fixation permet aussi de procéder sans recouvrement des parties périphériques du vitrage d'une part et de la platine ou de l'élément structurel intermédiaire, d'autre part. Ces parties périphériques peuvent en particulier être disposées dans le prolongement du bord du vitrage.

Lorsque la platine ou l'élément structurel intermédiaire portant plusieurs moyens d'entraînement s'étend sur une partie du bord du vitrage, ceux-ci sont disposés avantageusement de telle sorte que leur surface affleure celle du vitrage voisin, au moins dans les zones balayées par les essuie-glace lorsque ceux-ci viennent à l'arrêt dans une zone de repos. La disposition est telle que les balais dans cette position ne portent plus sur le vitrage, et comme indiqué plus loin, que la structure choisie permette l'escamotage de ces balais en cas de choc piéton.

Pour améliorer le passage des essuie-glace vers cette zone de repos, un élément de jonction est avantageusement disposé. Cet élément qui peut être très étroit est avantageusement formé du matériau servant à la fixation de l'élément structurel intermédiaire ou de la platine.

Pour présenter toutes les caractéristiques requises vis-à-vis du choc piéton, les moyens de fixation des mécanismes moteurs d'entraînement comportent des zones de résistance mécanique réduite. Ces zones se situent entre le vitrage et les moyens moteurs. Elles sont avantageusement disposées sur les moyens de fixation du moteur à la platine. Elles peuvent aussi se situer sur les moyens de fixation des platines sur l'élément structurel intermédiaire. Enfin elles peuvent aussi se situer sur les moyens de collage, moulage ou d'encapsulation.

Pour faciliter l'escamotage des balais d'essuie-glace dans le cas de plusieurs moyens d'entraînement fixés sur une platine unique ou sur plusieurs platines fixées sur un élément structurel intermédiaire, leur position de repos correspond avantageusement à une partie évidée de la platine ou de cet élément structurel, partie évidée recouverte d'une feuille de faible résistance mécanique. Cette feuille peut être rapportée et fixée dans l'évidemment par des moyens également de collage ou d'encapsulation. Elle peut le cas échéant être formée directement par le matériau d'encapsulation lui-même. De préférence, néanmoins, la feuille est rapportée et de dimension correspondant à l'évidement. Elle est avantageusement constituée d'un matériau dont la surface offre un coefficient de friction faible avec les balais d'essuie-glace. Cette feuille peut notamment être une feuille de verre.

Toujours pour faciliter l'escamotage des balais d'essuie-glace, le bord du vitrage peut également constituer la zone de repos pour autant que la construction du vitrage soit telle que cette zone puisse se séparer de l'ensemble du vitrage sous l'effet de forces correspondant aux limites définies par la réglementation "choc piéton". Un mode éventuel de réalisation consiste à procéder à une amorce de rupture sur les vitrages. Sur les vitrages feuilletés qui doivent par ailleurs offrir une grande résistance mécanique, la zone en question peut être ménagée sur une partie du vitrage ne donnant pas lieu à un feuilletage.

D'autres caractéristiques et avantages de l'invention apparaîtront à la lecture de la description détaillée qui va suivre pour la compréhension de laquelle on se reportera aux dessins annexés parmi lesquels :
- la figure 1 est une vue en perspective de dessus et de trois-quarts avant qui illustre un premier mode de réalisation d'un agencement selon, l'invention pour la fixation d'un mécanisme d'entraînement à l'angle inférieur gauche d'un pare-brise de véhicule automobile;
- la figure 2 est une vue similaire à celle de la figure 1 sans la plaque supérieure d'habillage;
- la figure 3 est une vue analogue à celle de la figure 2, sans le pare-brise;
- la figure 4 est une vue analogue à celle de la figure 3, sans le mécanisme d'entraînement de l'essuie-glace;
- la figure 5 est une vue analogue à celle de la figure 4, sans la platine intermédiaire de fixation, qui illustre la portion supérieure de l'élément de structure sur laquelle sont fixés la platine et le pare-brise;
- la figure 6 est une vue analogue aux précédentes qui illustre la platine intermédiaire de fixation et le mécanisme d'entraînement fixé sur la platine en trois points;
- la figure 7 est une vue schématique en section par un plan vertical selon la ligne 7-7 de la figure 2;
- la figure 8 est une vue analogue à celle de la figure 4 qui illustre une variante de réalisation;
- la figure 9 est une vue analogue à celle de la figure 4 qui illustre un deuxième mode de réalisation d'un agencement selon l'invention;
- la figure 10 est une vue analogue à celle de la figure 7 qui est une vue en section du deuxième mode de réalisation;
- la figure 11 est une vue à plus grande échelle du détail D11 de la figure 10;
- la figure 12 est une vue de détail en perspective d'une variante de réalisation du deuxième mode de réalisation;
- la figure 13 est une vue analogue à celle de la figure 4 qui illustre une variante de réalisation de la seule platine intermédiaire de fixation qui est réalisée par moulage en matière plastique;
- les figures. 14 et 15 sont deux vues schématiques illustrant un mode de, positionnement et de fixation par tenon et mortaise entre le panneau vitré et la platine intermédiaire de fixation;
- les figures 16 et 17 sont des vues analogues à celles des figures 14 et 15, qui illustrent un autre mode de positionnement et de fixation par emboîtement élastique;
- la figure 18 est analogue à la figure 10 avec en plus la plaque d'habillage ;
- la figure 19 présente un autre mode de réalisation d'une platine selon l'invention;
- la figure 20 est une vue analogue à la figure 9, comportant en plus le mécanisme d'entraînement des essuie-glace ;
- la figure 21 est une vue en perspective d'un mode de réalisation d'un ensemble pour fixation de deux éléments d'entraînement ;
- la figure 22 est une vue de dessous analogue à celle de la figure 21, avec les éléments d'entraînement et les essuie-glace, la feuille recouvrant la zone de repos des essuie-glace en partie enlevée ;
- la figure 23 est une vue en perspective de dessus, analogue à la figure 21 d'un autre mode de réalisation d'un ensemble de fixation de deux éléments d'entraînement des essuie-glace;
- la figure 24 est une vue partielle en coupe en perspective de trois-quarts dessus de la partie centrale d'un mode de réalisation de l'élément de structure intermédiaire
- la figure 25 présente une variante de la figure 23 comportant une feuille rapportée sur la zone de repos de l'élément structurel intermédiaire, et des plaques d'habillage recouvrant les éléments d'entraînement ;
- la figure 26 est une vue en perspective de dessus analogue au mode de réalisation de la figure 23.

Dans la description qui va suivre, des éléments et composants identiques, similaires ou analogues seront désignés par les mêmes chiffres de référence.

Dans la description et les revendications, on utilise les termes horizontal, vertical, supérieur, inférieur, transversal, longitudinal, en référence- au trièdre L, V, T indiqué sur les figures, et ceci, à titre non limitatif.

Ainsi, les différents exemples de réalisation et variantes de l'invention, sont décrits en référence à un mécanisme d'essuie-glace d'un pare-brise de véhicule automobile qui est ici présenté globalement horizontal.

Bien entendu, l'invention n'est pas limitée à cette conception, le pare-brise présentant dans la réalité une inclinaison par rapport à l'horizontale. Selon la nature du vitrage son inclinaison peut même être globalement verticale, notamment lorsqu'il s'agit d'une vitre équipant une lunette arrière de véhicule automobile.

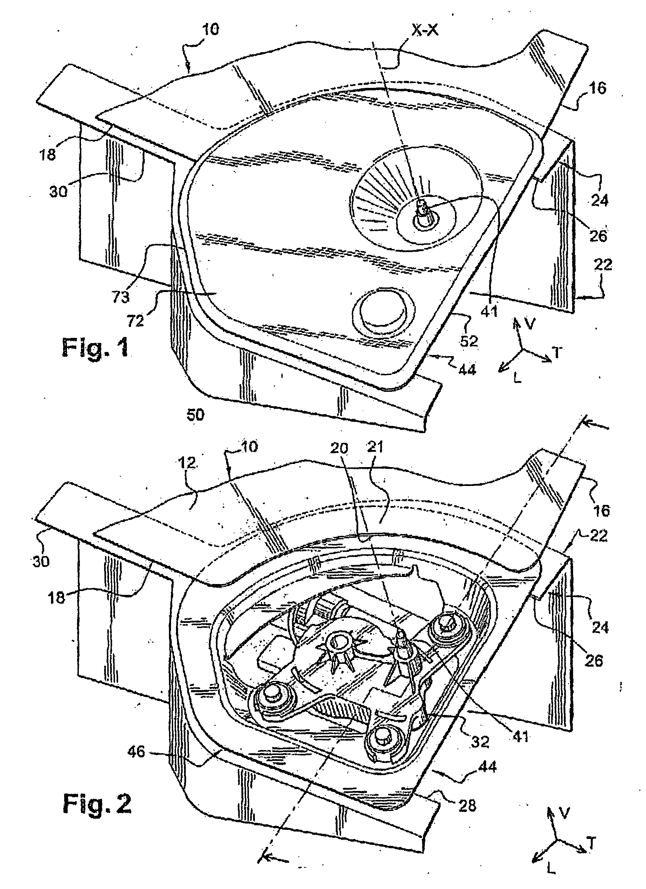

On a représenté sur les figures 1-6,8,9,13,19 et 20, la partie inférieure avant gauche 10 d'un pare-brise de véhicule automobile qui comporte une face supérieure 12 présentée horizontale, qui s'étend dans le plan L, T, et une face inférieure 14.

Cette partie est délimitée par un bord latéral 16, et un bord transversal avant 18, qui sont reliés par un bord d'angle 20 présentant ici un profil sensiblement en arc de cercle concave. Le profil, ou contour 18, 20, 16 correspond sensiblement à la forme de l'élément de structure de caisse 22 agencé en regard de la partie 10 du pare-brise.

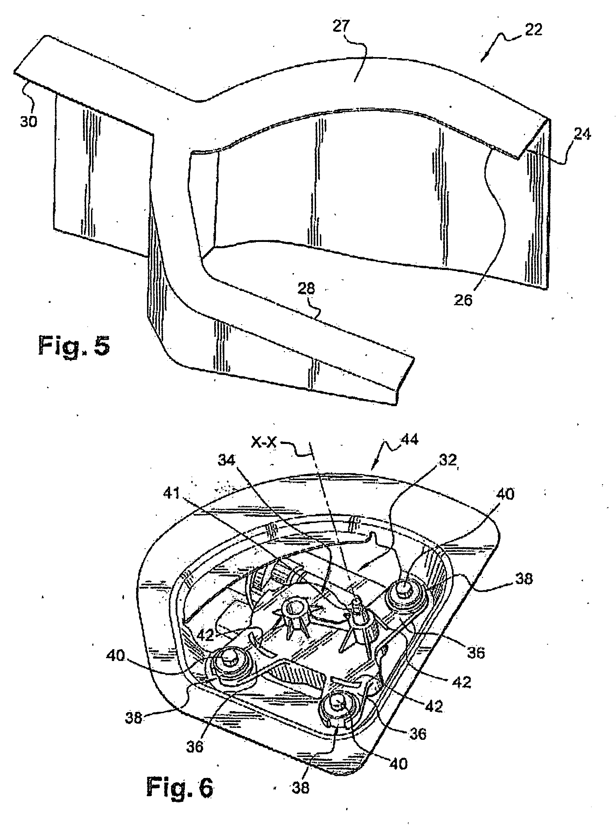

L'élément de structure de caisse 22, qui est représenté en détail à la figure 5, est ici un élément de tôlerie qui, du point de vue de l'agencement selon l'invention, est constitué pour l'essentiel par une bande supérieure de tôle 24 qui s'étend globalement dans un plan horizontal L, T parallèle au plan du panneau vitré 10 et qui présente une forme de fourche à deux branches.

Ainsi, la bande de tôle 24 comporte une première branche arrière et d'orientation globalement transversale 26 de forme circulaire correspondant au bord d'angle 20 du panneau 10, et une branche avant 28 de contour circulaire, les deux branches se rejoignant et se prolongeant par une branche rectiligne transversale qui se prolonge vers la droite du véhicule en direction de l'autre angle droit du pare-brise.

Comme on peut le voir notamment à la figure 2, le bord 18 du panneau 10 est prévu pour s'étendre au-dessus de la branche 30, tandis que le bord 20 s'étend au-dessus de la branche 26.

La largeur de la bande 24 est telle qu'il existe un recouvrement entre les parties en correspondance 21 du panneau vitré 10 et de l'élément de structure de caisse 22.

On a aussi représenté un mécanisme d'entraînement 32, ou ensemble moto-réducteur, appartenant à un mécanisme d'essuie-glace, qui de manière connue, comporte une plaque de fixation 34 qui se prolonge par trois bras 36 de fixation à l'extrémité libre de chacun desquels sont prévus des moyens de fixation 38 avec amortisseur de vibrations.

Chaque point de fixation comporte par exemple une vis 40 illustrée schématiquement, ou un élément de fixation équivalent, dont l'axe est ici globalement vertical et parallèle à l'axe X-X de l'arbre d'entraînement, ou arbre de sortie 41 dont l'axe de rotation X-X est d'orientation globalement verticale, c'est-à-dire orthogonal au plan horizontal L, T dans lequel s'étend le panneau vitré 10.

La plaque 34 est ici globalement horizontale, de même que les bras 36, de manière que les trois points de fixation 38 soient situés sensiblement dans le même plan avec la partie la plus volumineuse de l'ensemble moto-réducteur 32 située verticalement en dessous du plan de la plaque 34.

Afin de permettre l'effacement du mécanisme d'essuie-glace en cas de choc avec un piéton, chaque bras 36 est relié à la plaque 34 avec une amorce de rupture 42.

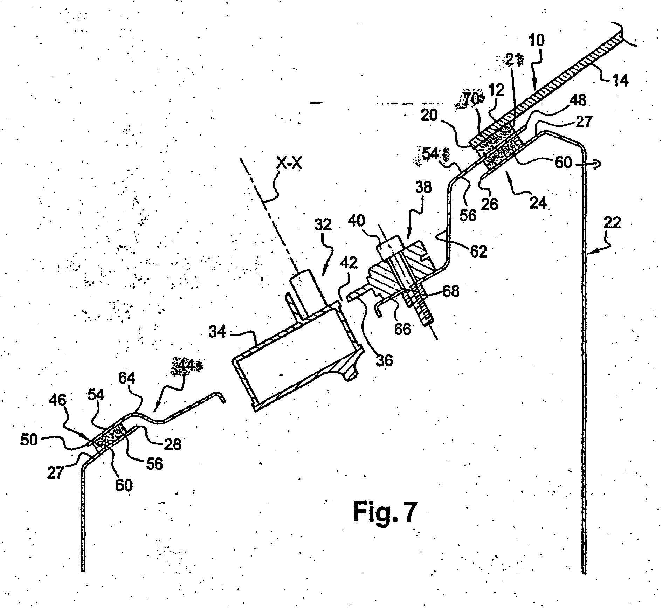

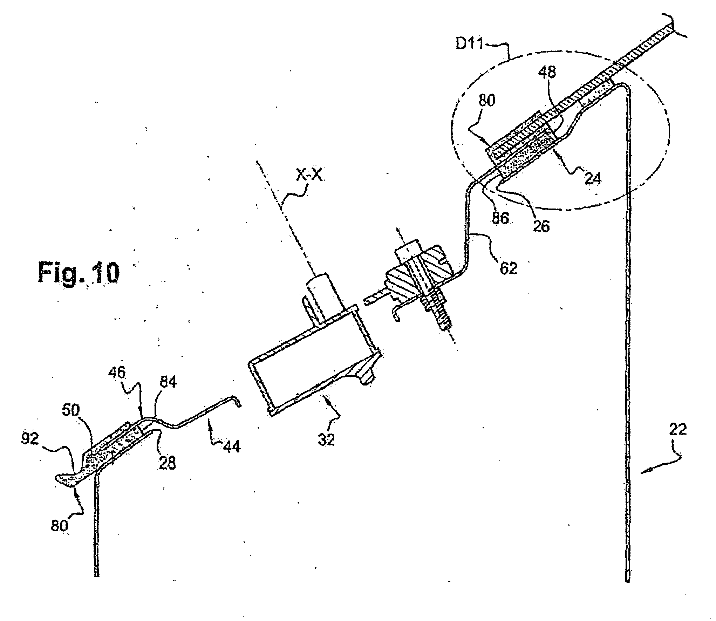

Conformément aux enseignements de l'invention, il est prévu une platine intermédiaire de fixation et de positionnement 44 pour permettre, la fixation indirecte du mécanisme d'entraînement 32 sur le panneau vitré 10, 21. Dans l'exemple présenté aux figures 7 et 10 le mécanisme d'entraînement 32 est en outre fixé sur l'élément de structure de caisse 22.

Dans les modes de réalisation et variantes, illustrés aux figures 1 à 12, la platine intermédiaire de fixation 44 est une pièce en tôle découpée et emboutie.

La forme globale de la platine 44 est complémentaire de celle de l'élément de structure de caisse 22.

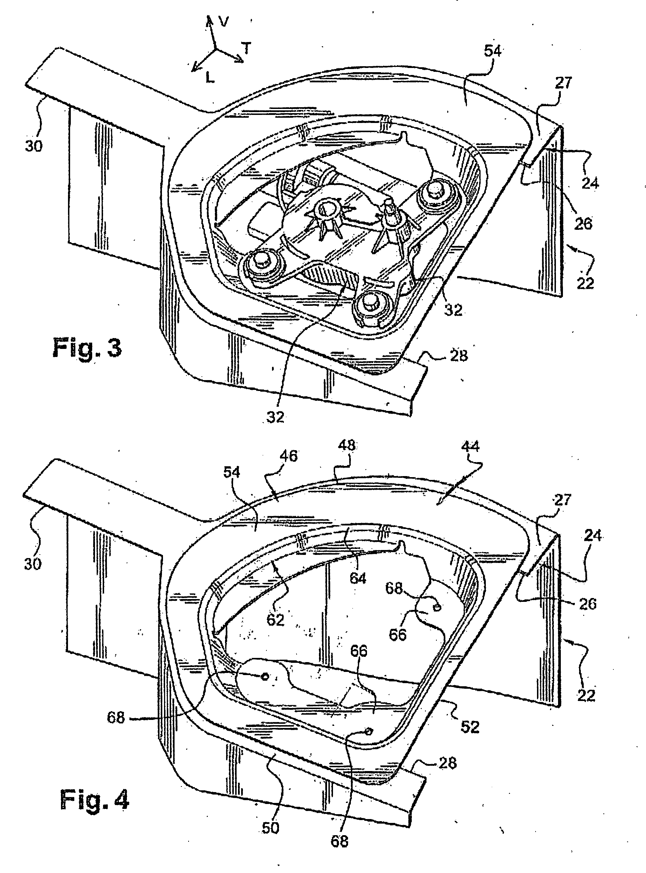

Comme on peut le voir plus précisément, notamment à la figure 4, la platine 44 est constituée pour l'essentiel par une collerette supérieure périphérique 46 qui se présente sous la forme d'un anneau en tôle qui s'étend dans le plan horizontal L, T et dont le contour ou profil est complémentaire de celui de la bande de tôle 24 de l'élément de structure de caisse 22.

Ainsi, la collerette 46 comporte une branche arrière en arc de cercle 48 qui s'étend au-dessus de la branche 26, une branche avant en arc de cercle 50 qui s'étend au-dessus de la branche 28, ces deux branches étant reliées entre elles par une branche longitudinale 52 de rigidification.

La collerette comporte une face supérieure annulaire plane et horizontale 54, et une face inférieure parallèle 56.

Grâce à la conformation de la collerette 46 complémentaire de celle de la bande de tôle 24, et comme on peut le voir notamment aux figures 4 et 7, il est possible outre la fixation sur le vitrage, de fixer la platine intermédiaire 44 sur l'élément de structure 22 par exemple par collage de la face inférieure 56 de la collerette 44 sur la face supérieure 27 de la bande de tôle 24, comme cela est illustré schématiquement à la figure 7 sur laquelle on a représenté un joint de colle périphérique 60.

Outre sa collerette annulaire 46, la platine intermédiaire de fixation 44 comporte une paroi verticale annulaire 62. Cette paroi 62 prolonge le bord périphérique interne 64 de la collerette verticalement vers le bas, et relie la collerette 46 à trois éléments de fixation 66, chacun en forme de plaque horizontale. Les éléments de fixation 66 s'étendent dans un même plan décalé verticalement vers le bas par rapport au plan de la collerette supérieure 46, et chacun comporte un trou 68 destiné à recevoir l'élément correspondant 40 de fixation du mécanisme d'entraînement 32.

La platine 44 présente ainsi une grande rigidité et une grande compacité tout en offrant une surface importante de liaison et de fixation d'une part avec le vitrage, et d'autre part avec l'élément de structure 22.

Dans le premier mode de réalisation, la face supérieure 54 de la collerette 46 de la platine intermédiaire de fixation 44 est fixée directement sur la partie 21 du panneau vitré.

A cet effet, il est prévu un joint de colle qui s'étend sensiblement sur toute la face supérieure 54 de la collerette 46. Le joint de colle assure ainsi la fixation et le positionnement par collage sur la portion 21 du panneau vitré 10 délimitée par son bord d'angle circulaire 20 sur la branche 48 de la collerette 46.

La fixation par collage de la platine intermédiaire de fixation 44 sur le panneau vitré 10, assure donc ainsi directement le positionnement relatif de l'axe X-X de l'arbre d'entraînement de l'essuie-glace par rapport au panneau vitré 10, et notamment par rapport à sa portion d'angle inférieure gauche 18, 20, 16.

Comme on peut le voir à la figure 1, il est possible de recouvrir l'ensemble de l'agencement de fixation et de positionnement par un panneau supérieur d'habillage 72 dont le contour extérieur 74 est complémentaire de celui de la platine intermédiaire 44 qu'il recouvre, ainsi que la portion périphérique annulaire en arc de cercle 21 du panneau vitré 10.

Le fait de recourir à deux assemblages par collage, d'une part, entre la platine intermédiaire 44 et le panneau vitré 10, 21 et, d'autre part, entre la platine 44 et l'élément de structure de caisse 22, permet par exemple de réaliser tout d'abord la fixation et le positionnement de la collerette 46 de la platine 44 sur le panneau vitré 10, ce qui permet d'obtenir définitivement le positionnement correct recherché, puis de fixer ensuite le panneau vitré 10 avec sa ou ses platines intermédiaires 44 sur la caisse du véhicule.

De la même manière, le mécanisme d'entraînement 32 peut être fixé sur la platine intermédiaire 44, avant ou après la fixation de celle-ci sur le panneau vitré 10 et sur l'élément de structure de caisse 22.

Inversement, il est possible de fixer et de positionner la platine 44 sur 1 élément de structure de caisse 22, puis de positionner et de fixer le panneau vitré 10 par rapport à la platine intermédiaire 44. Néanmoins, les constructeurs qui recherchent l'intégration la plus poussée possible d'éléments pour faciliter l'assemblage, préfèrent la solution précédente comportant la formation préalable de l'ensemble vitrage platine et mécanisme d'entraînement, avant la fixation de cet ensemble sur la structure de caisse.

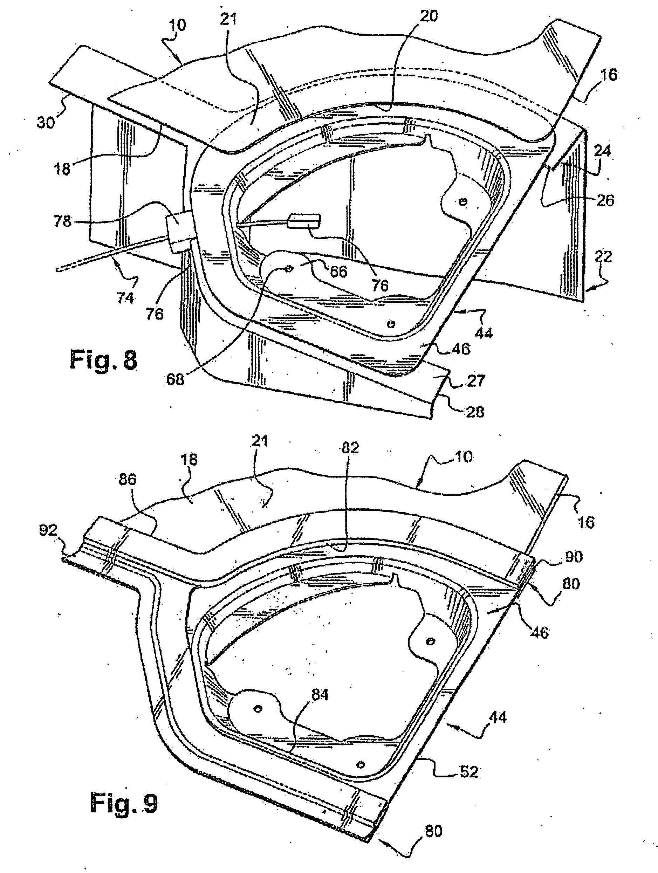

Dans la variante de réalisation illustrée à la figure 8, il est prévu l'agencement d'un câble 74 de connexion du mécanisme d'entraînement 32 qui porte un connecteur 76 et qui traverse l'élément de structure de caisse 22 par l'intermédiaire d'une découpe 77 formée dans la tôle à cet effet, ici dans la branche 28 de la bande de tôle 24 avec interposition d'un élément de protection et de guidage de la traversée 78, le câble 74 avec l'élément de traversée 78 pouvant avantageusement être mis en place dans sa découpe 77 avant la fixation de la platine intermédiaire 44.

Dans le deuxième mode de réalisation illustré aux figures 9 à 11, les branches fonctionnelles 48 et 50, pour la fixation et le positionnement de la collerette supérieure 46 de la platine intermédiaire de fixation 44, sont revêtues d'un joint ou enrobées par "encapsulation" ou surmoulage périphérique 80 sur le pourtour de la collerette 46, qui comporte à cet effet deux branches arrière 82 et avant 84 qui se prolongent par une branche transversale horizontale 86.

L'encapsulation ou surmoulage s'étend avantageusement sur toute la périphérie du vitrage. Ceci n'est pas représenté à la figure 9 pour plus de clarté. Néanmoins l'encapsulation ou surmoulage se prolonge sur le bord 16 du vitrage et éventuellement également sur le bord 42 de la platine 44.

Lorsqu'un joint 80 est utilisé, il comporte une fente périphérique radialernent intérieure 88 qui reçoit l'épaisseur de tôle correspondant de la collerette 46.

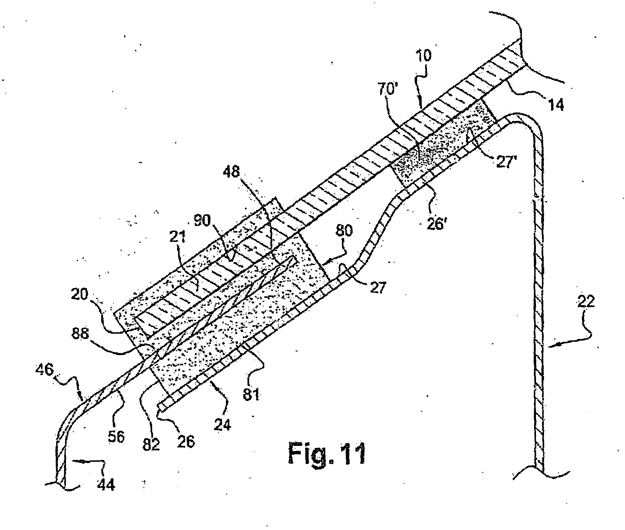

De la même manière, et comme on peut le voir plus précisément à la figure 11, la branche arrière 82 du joint 80 comporte une fente périphérique ouverte radialement vers l'extérieur 90 qui reçoit le bord 20 du panneau vitré 10, 21.

Les figures 10 et 11 montrent des modes de fixation de l'ensemble vitrage et platine sur l'élément de structure du véhicule. L'ensemble joint, encapsulation ou surmoulage 80 est collé sur la face supérieure 27 de la branche arrière 26 de la bande de tôle 24. Le collage peut être effectué directement par un adhésif situé sur l'élément 80. Le même type de collage peut être mis en oeuvre sur la partie du joint faisant face à la partie 28 de la structure du véhicule.

Le plus fréquemment la fixation est faite dans les conditions habituelles pour la fixation des pare-brise, par collage au moyen d'un joint de colle 70' entre la face inférieure du panneau vitré 10, sur la face supérieure 27' de la structure. L'ensemble vitrage et platine comportant les éléments d'entraînement des essuie-glace étant alors fixé en une opération de collage sur la structure.

Comme on peut le voir plus précisément à la figure 9, le positionnement précis de la platine intermédiaire 44 par rapport au panneau vitré 10 résulte notamment de la coopération des deux branches 82 et 86 du joint ou de l'encapsulation, surmoulage 80 qui épouse et entoure les bords du panneau vitré 10.

Lorsque le joint, encapsulation ou surmoulage 80, recouvre au moins tout le long du bord inférieur avant 12 du pare-brise 10 il peut constituer aussi, de manière connue, le joint d'écoulement de l'eau du pare-brise en comportant à cet effet, comme on peut le voir à la figure 10, une rigole ou gouttière 92.

Le pare-brise 10, avec par exemple deux platines de fixation 44 et le joint 80 constitue alors un sous-ensemble qui est mis en place sur la caisse du véhicule avec les platines qui viennent en regard de deux portions complémentaires de structure de caisse 22.

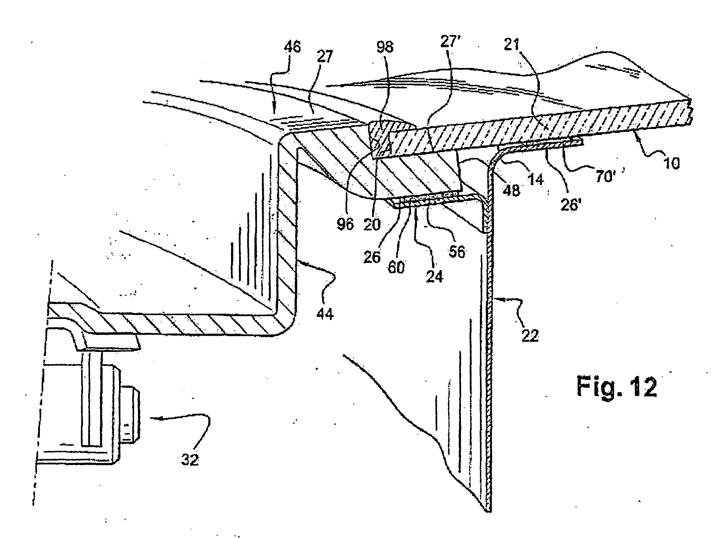

La figure 12 présente une variante de réalisation. La branche arrière 48 de la collerette 46, est disposée par rapport au bord 20 du panneau vitré 10 au moyen d'un épaulement 96 prévu à cet effet dans la collerette 46 qui est de contour complémentaire de 20 avec interposition d'un joint rigide ou semi-rigide d'habillage et d'étanchéité 98 entre le bord 20 et épaulement 96. Le panneau vitré 10 est collé directement, par le joint de colle 70' sur un prolongement 26' de la branche 26 de l'élément de structure de caisse 22.

La collerette 44 est alors également fixée sur l'élément de structure de caisse 22, par collage.

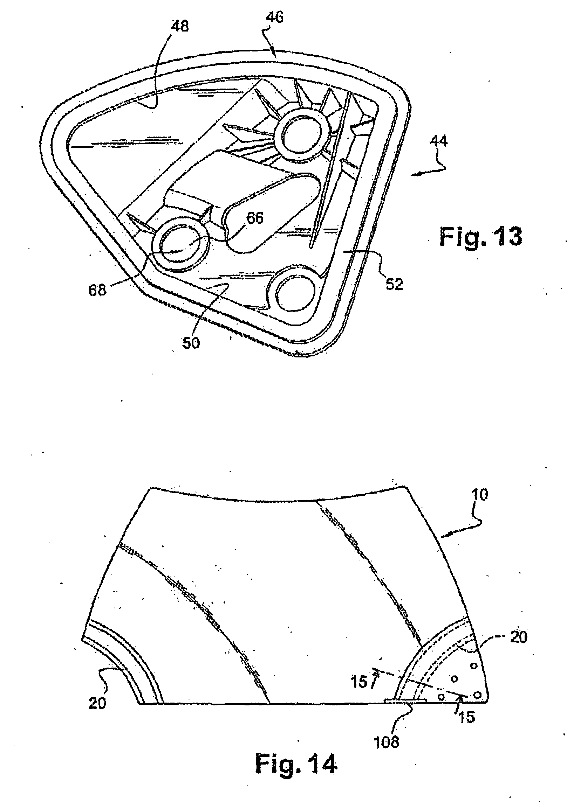

On a représenté à la figure 13 une platine intermédiaire 44 qui est ici une pièce moulée en matière plastique dont la forme et la conception générale sont analogues à celles décrites précédemment dans le cas d'une platine 44 en tôle découpée et emboutie.

Les zones 66, 68 qui constituent les points de fixation du mécanisme d'entraînement peuvent être réalisées sous la forme d'inserts autour desquels est surmoulé le corps de la platine intermédiaire de fixation 44.

La figure 14 est une vue schématique de dessus d'un pare-brise 10 dont chacun des deux angles inférieurs comporte sur ses deux faces supérieure 13 et inférieure 14 deux rainures en arc de cercle parallèles au bord 20, supérieure 100 et inférieure 102 destinées à recevoir des tenons complémentaires supérieur 104 et inférieur 106 formés dans la branche arrière 48, conformée à cet effet, de la collerette 46 de la platine intermédiaire 44 qui est par exemple, dans ce cas, de préférence réalisée par moulage en matière plastique.

Il est ainsi possible de réaliser un assemblage du type tenon et mortaise entre la platine 44 et le panneau vitré 10, 21 selon un mouvement en arc de cercle dans le plan horizontal, puis de prévoir ensuite des moyens de butée 108 pour immobiliser l'un par rapport à l'autre.

Ici encore, ce type d'assemblage permet de réaliser un sous-ensemble constitué par le pare-brise 10 et ses platines intermédiaires 44 de fixation des mécanismes d'entraînement des essuies-glaces.

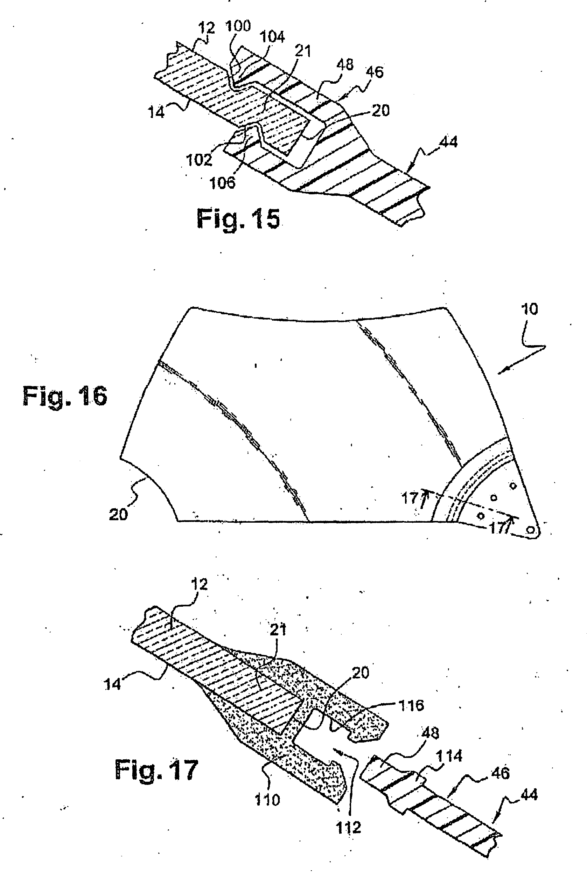

Aux figures 16 et 17, le bord 20 de chaque angle 21 du pare-brise 10 est muni d'une pièce rapportée, par exemple moulée en matière plastique, 110 qui constitue une pince déformable élastiquement 112, destinée à recevoir les branches 48 et 49 de la collerette 46,de la platine intermédiaire de fixation 44 qui présente une forme de flèche 114 complémentaire de celle du logement 116 de la pince 112 afin de retenir la collerette 46 dans la pince après son introduction par emboîtement élastique.

Il est bien entendu possible de prévoir de plus une pince 30 complémentaire évitant toute ouverture accidentelle de la pince 112 après l'assemblage.

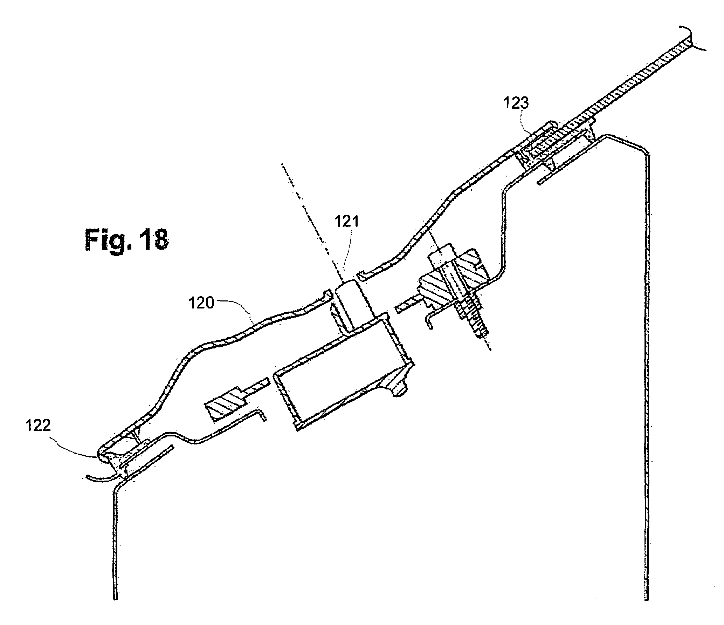

La figure 18 analogue à la figure 10 montre en coupe le mode d'habillage de l'ensemble d'entraînement des essuie-glace. Le cache 120 qui laisse passer l'arbre moteur par une ouverture centrale 121, est fixé de manière à pouvoir être enlevé de manière commode pour donner accès au mécanisme d'entraînement. La fixation de l'habillage représentée à cette figure comporte d'une part un bord recourbé 122 engagé dans une rainure correspondante ménagée dans l'extrémité du joint, encapsulation ou surmoulage 84, et d'autre part un tenon 123 introduit dans le logement correspondant de la partie 86. L'introduction du tenon 123 bénéficie du caractère semi-rigide du joint, encapsulation ou surmoulage.

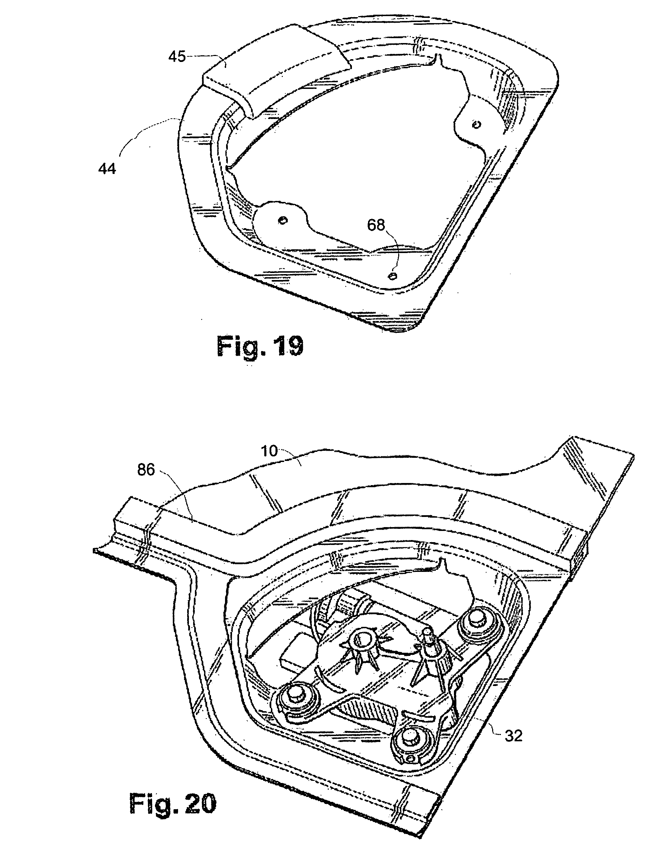

La figure 19 montre un mode de réalisation de la platine 44 comportant un bossage 45.

La figure 20, analogue à la figure 9 montre une disposition des moyens moteurs d'entraînement 32, sur la platine encapsulée.

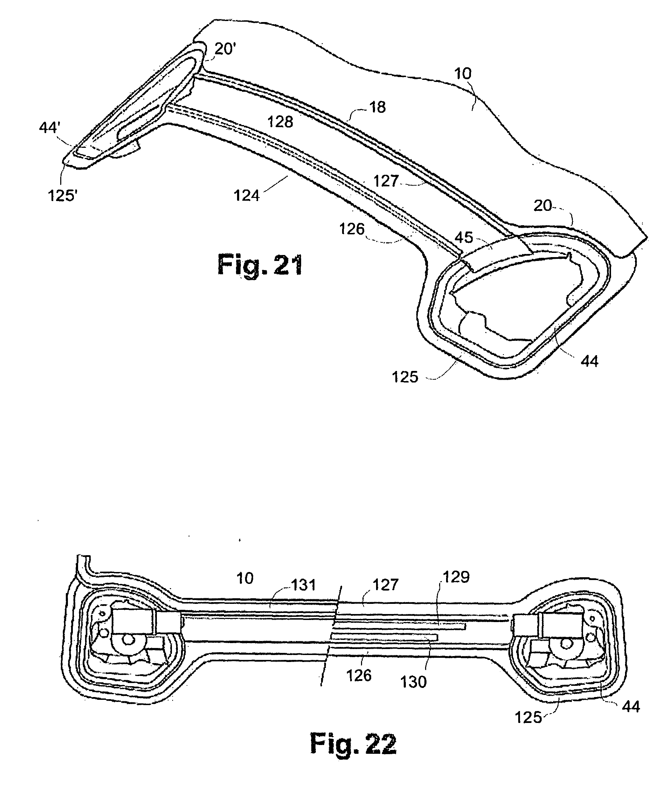

La figure 21 est une illustration d'un mode de fixation comportant deux platines 44 et 44' associées à un élément structurel intermédiaire 124 s'étendant sur toute la largeur du bord inférieur 18 du pare-brise 10. L'élément 124 présente à chaque extrémité, un ensemble de forme annulaire 125, 125' correspondant à celui des platines 44 et 44'. Les extrémités en question entourent les platines en étant situées dans le même plan. La fixation des platines sur les extrémités annulaires 125, 125' est réalisé de préférence par encapsulation ou surmoulage. Cette fixation est avantageusement conduite simultanément à celle de fixation de l'élément structurel intermédiaire sur le bord 18 du vitrage.

La collerette des platines 44 et 44' peut aussi s'étendre jusqu'à se trouver en regard des extrémités annulaires 125 et 125'. Cette disposition n'est pas représentée.

L'élément structurel intermédiaire peut être fixé sur la structure de caisse suivant les façons décrites précédemment à propos des platines unitaires. Cet élément peut en particulier être collé sur la structure en plus du collage du vitrage sur la structure.

Pour une stabilité accrue de l'ensemble supporté par l'élément structurel 124, il est avantageux de disposer au moins les extrémités annulaires 125, 125' de telle sorte qu'elles soient partiellement en regard du bord 20, 20' du vitrage. Le collage ou l'encapsulation surmoulage peut alors être très rigide assurant un excellent positionnement des ensembles d'entraînement.

Dans la forme de la figure 21 l'élément structurel intermédiaire 124, comporte également des membrures 126 et 127 reliant les extrémités 125,125' qu'elles maintiennent dans des positions rigoureuses. Comme représenté à la figure 21, la membrure 127 présente avantageusement une forme correspondant à celle du bord 18 du vitrage permettant une fixation sur toute la longueur de ce bord et contribuant ainsi à la rigidité de l'ensemble.

De préférence les extrémités 125 et 125'sont réunies comme indiqué ci-dessus par les membrures 126 et 127 laissant entre elles un évidement 128. De manière alternative la jonction entre les extrémités 125 et 125' peut être réalisée au moyen d'une plaque profilée se substituant aux membrures.

La figure 22 montre un mode de fixation par encapsulation ou surmoulage de l'élément structurel intermédiaire 124 sur le vitrage 10. La vue de dessous montre sur la partie gauche le mode d'encapsulation. Le matériau d'encapsulation 131, dans ce mode représenté, recouvre les membrures 126, 127, la périphérie des platines 44 et 44', le bord 18 du vitrage 10. Le même matériau s'étend encore sous forme d'une feuille entre les membrures et recouvre l'évidement 128 assurant la continuité entre les membrures 126, 127. Cette disposition est représentée en particulier aux figures 22, 23 et 26.

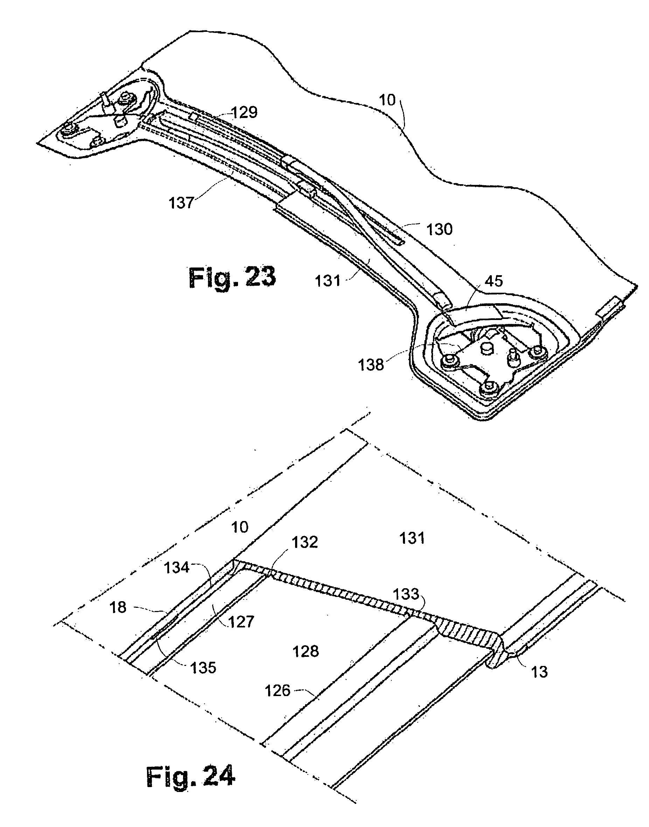

La figure 23, montre le positionnement des essuie-glace 129, 130, au repos, sur le matériau 131 d'encapsulation recouvrant l'évidemment 128.

La figure 24 montre de manière plus détaillée le mode de recouvrement de l'évidement 128 de l'élément structurel intermédiaire 124, par une feuille de matériau servant à l'encapsulation ou surmoulage. Les membrures 126 et 127 sont recouvertes du matériau 131 qui forme une feuille s'étendant sur l'évidement 128. Dans la forme représentée le vitrage 10 est fixé par le matériau 131 qui s'insère entre l'aplat 134 de la membrure 127 et le bord 18 du vitrage.

Pour assurer une bonne fixation du matériau sur l'élément structurel 124, et particulièrement sur les membrures 126, 127 des ouvertures 135 de faibles dimensions permettent au matériau de s'insérer partiellement ajoutant aux propriétés d'adhésion propres à ce matériau.

Le matériau 131 est avantageusement disposé de manière à présenter une surface sans discontinuité avec la face supérieure du vitrage 10 comme représenté à la figure 24. Cette disposition favorise le passage des essuie-glace de l'appui sur le vitrage 10 à la surface qui le prolonge.

De manière préférée les essuie-glace 129, 130 en position de repos se placent au-delà du bord 18 du vitrage 10, dans la partie de l'élément structurel intermédiaire 124, correspondant à l'évidement 128. Cette disposition est celle qui apparaît aux figures 22, 23 et 26. Le choix d'une telle disposition permet en particulier de disposer les essuie-glace sur un élément susceptible de se rompre en cas de choc piéton. Pour parvenir à ce résultat l'évidement 128 est recouvert d'une feuille suffisamment rigide pour ne pas se déformer sous la pression des essuie-glace, mais également suffisamment fragile pour se rompre en cas de choc. Le matériau d'encapsulation peut correspondre à des propriétés de cette nature. Le cas échéant, pour faciliter la rupture en cas de choc, la partie du matériau correspondant à l'évidement peut être fragilisée par la formation de lignes 132, 133 de moindre épaisseur.

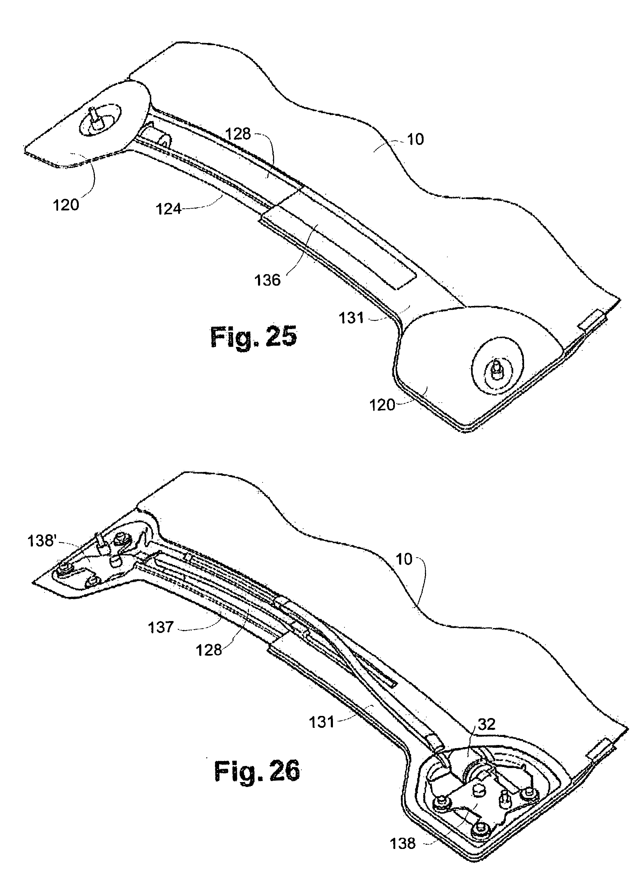

Dans les réalisations représentées aux figures 21, 22 et 23, les platines portant les éléments d'entraînement, sont fixées sur l'élément structurel intermédiaire. Il est possible également de constituer en une pièce cet élément de telle sorte qu'il remplisse aussi la fonction des platines 44 et 44' des réalisations précédemment présentées. Ce mode de réalisation est celui présenté à la figure 26. Dans ce mode les extrémités de l'élément structurel 137, sont constituées de manière à recevoir directement les éléments moteurs disposés sur une plaque (138, 138') qui est analogue par exemple à la plaque 34 de la figure 6.

La figure 25, analogue aux figures 23 et 26, comporte en outre une plaque rapportée destinée à recouvrir l'évidement 128. L'avantage de compléter l'ensemble de fixation de la manière représenté est double. D'une part cet élément peut être choisi de manière à offrir la résistance au choc moindre qui est recherchée. D'autre part la nature du matériau qui le constitue peut également faciliter le passage des essuie-glace en offrant un coefficient de friction réduit. L'inconvénient relatif des matériaux d'encapsulation ou de surmoulage traditionnellement utilisés avec les vitrages automobiles peut venir de leur trop grande résistance au choc (laquelle, comme indiqué ci-dessus, peut être tournée en créant des points d'affaiblissement) mais aussi de ce que la friction avec les balais d'essuie-glace peut être trop importante. L'utilisation d'une plaque d'un matériau distinct peut résoudre ces difficultés. En particulier il est possible d'insérer une plaque de verre relativement fragile qui assure par ailleurs une friction qui n'est pas différente de celle existant entre les essuie-glace et le pare-brise lui-même.

La mise en place d'une telle plaque rapportée est avantageusement réalisée par les mêmes moyens de fixation que ceux utilisés pour fixer l'élément structurel sur le bord du vitrage 10. Il s'agit par exemple de procéder par surmoulage ou encapsulation, et de préférence dans la même opération que celle conduisant à fixer l'élément structurel sur le vitrage.

## Revendications

1. Ensemble d'un pare-brise automobile et d'au moins un mécanisme d'entraînement d'un balai d'essuyage de la face supérieure externe du vitrage comportant une platine intermédiaire de fixation, le mécanisme d'entraînement étant fixé sur la platine intermédiaire de fixation laquelle est solidarisée à une partie périphérique du pare-brise **caractérisé en ce qu'**il comporte au moins deux mécanismes d'entraînement (32) chacun étant fixé sur une platine distincte(44,44'), chaque platine étant fixée sur un même élément structurel intermédiaire (124, 137) lequel est encapsulé, surmoulé ou collé sur une partie au moins du bord du pare-brise (10) le long duquel il s'étend, les platines intermédiaires de fixation étant, elles-mêmes fixées sur cet élément structurel par encapsulation, surmoulage ou collage.

2. Ensemble selon la revendication 1, dans lequel l'élément structurel intermédiaire (124, 137), s'étend globalement dans un plan parallèle au plan du pare-brise, et en ce que la partie périphérique (21) du pare-brise (10) et une partie de l'élément structurel intermédiaire (124,137), se superposent.

3. Ensemble selon l'une des revendications 1 ou 2 dans lequel les platines intermédiaires de fixation (44,44') comportent une collerette périphérique (46) de fixation, par l'intermédiaire de laquelle la platine est fixée sur l'élément structurel intermédiaire (124).

4. Ensemble selon la revendication 1 dans lequel l'élément structurel (124) et les platines de fixation (44,44') sont fixés les uns aux autres, et ensemble fixés au pare-brise (10) par une même encapsulation ou un même surmoulage.

5. Ensemble selon l'une des revendications 1 ou 2 dans lequel l'élément structurel intermédiaire (124, 137) s'étendant le long du bord (18) du pare-brise (10), est disposé bord à bord dans le prolongement de la surface de ce dernier, la continuité étant assurée par un élément affleurant à ces surfaces, au moins dans la ou les zones balayées par les balais d'essuie-glace (129,130) lorsque ceux-ci viennent à l'arrêt dans une zone de repos.

6. Ensemble selon l'une des revendications précédentes dans lequel, dans les moyens de fixation disposés entre le bord du pare-brise (10) et les mécanismes d'entraînement, moyens comprenant notamment la fixation des mécanismes d'entraînement sur les platines intermédiaires, les platines intermédiaires et l'encapsulation, le surmoulage ou le collage, sont aménagées des zones de résistance mécanique réduite (42, 132, 133) destinées à faciliter la rupture dans les conditions réglementaires assurant la sécurité au « choc piéton ».

7. Ensemble selon la revendication 6 dans lequel les zones de résistance mécanique réduite sont constituées sur des pattes (36) assurant la fixation des mécanismes d'entraînement (32) sur la platine de fixation (44), par des lignes de moindre épaisseur (42).

8. Ensemble selon l'une des revendications précédentes dans lequel les balais d'essuie-glace se positionnent à l'arrêt sur des éléments (131,136) formant zones de repos, ces éléments s'étendant le long du bord (18) du pare-brise (10) dans le prolongement de la surface de ce dernier, ces éléments (131,136) comprenant des zones de résistance mécanique réduite (132,133) destinées à faciliter la rupture dans les conditions réglementaires assurant la sécurité au « choc piéton ».

9. Ensemble selon la revendication 8, dans lequel les éléments formant la zone de repos des essuie-glace sont constitués par une feuille (131,136) s'étendant sur un évidemment (128) de l'élément structurel intermédiaire (124) portant les deux platines (44,44').

10. Ensemble selon la revendication 9 dans lequel la feuille (131) s'étendant sur l'évidemment (128) est constituée par le matériau d'encapsulation ou de surmoulage de l'élément structurel intermédiaire (124) ou de l'élément formant platine (137), des lignes de moindre épaisseur (132,133) du matériau d'encapsulation ou de surmoulage, disposées sur le pourtour de l'évidement facilitant la rupture au « choc piéton ».

11. Ensemble selon la revendication 9 dans lequel la feuille située dans l'évidement (128) est constituée d'un matériau rigide de forme et dimensions correspondant à celles de l'évidemment, feuille (136) qui est fixée à l'élément structurel intermédiaire (124, 137) et est maintenue en position dans l'évidemment (128) par encapsulation ou surmoulage.

12. Ensemble selon la revendication 11 dans lequel la feuille (136) est entièrement enveloppée dans le matériau d'encapsulation ou de surmoulage qui la fixe à l'élément de structure intermédiaire (124), ou à l'élément formant platine (137), ces derniers étant fixés par le même matériau au bord (18) du pare-brise (10).

13. Ensemble selon la revendication 11 dans lequel la face supérieure de la feuille (136) située dans l'évidement (128), forme la zone sur laquelle reposent les balais d'essuie-glace (129,130) à l'arrêt, face qui est dans le prolongement de la face supérieure du vitrage.

14. Ensemble selon la revendication 13 dans lequel la face de la feuille (136) est en un matériau présentant une friction faible avec les le matériau des balais d'essuie-glace.

15. Ensemble selon la revendication 14 dans lequel la feuille (136) est en verre.

16. Ensemble selon l'une des revendications 1 à 7 dans lequel le pare-brise (10) est constitué de deux feuilles de verre assemblées au moyen d'un intercalaire plastique, la feuille constituant la face supérieure du vitrage débordant la feuille de la face inférieure sur le bord (18) du vitrage sur lequel l'élément structurel intermédiaire (124, 137) est fixé, la fixation n'étant effectuée que sur cette feuille supérieure, cette feuille supérieure comportant une ligne de fragilisation sensiblement le long du bord de la feuille inférieure, pour en faciliter la rupture au « choc piéton ».

17. Fixation d'un ensemble selon l'une des revendications précédentes dans laquelle le vitrage est collé sur la structure de caisse de l'automobile.

18. Fixation selon la revendication 17 dans laquelle simultanément l'élément de structure intermédiaire (124,137), est collé sur l'élément de structure de caisse en vis-à-vis.

19. Fixation d'un ensemble selon l'une des revendications 1 à 16, dans lequel l'élément de structure intermédiaire (124,137) est collés à sa périphérie sur la structure de caisse, et le vitrage lui-même est collé sur la structure, les deux opérations étant effectuées successivement.

## Claims

1. Automotive windscreen assembly including at least one windscreen wiper drive mechanism for the upper outside face of the glazing, comprising an intermediate fastening plate, wherein the drive mechanism is fixed to the intermediate fastening plate, which is integral to a peripheral section of the windscreen, **characterised in that** it comprises at least two drive mechanisms (32), each of which is fastened to a separate plate (44, 44'), wherein each plate is fastened to the same intermediate structural element (124, 137), which is encased in, moulded or glued onto at least one section of the edge of the windscreen (10) that it extends along, wherein the intermediate fastening plates are themselves fastened to this structural element by encasing, moulding or gluing.

2. Assembly according to claim 1, wherein the intermediate structural element (124, 137) extends as a whole in a plane parallel to the plane of the windscreen, and in that the peripheral section (21) of the windscreen (10) and a section of the intermediate structural element (124, 137) are superposed.

3. Assembly according to one of claims 1 or 2, wherein the intermediate fastening plates (44, 44') comprise a peripheral fastening flange (46), by means of which the plate is fastened to the intermediate structural element (124).

4. Assembly according to claim 1, wherein the structural element (124) and the fastening plates (44, 44') are fastened to one another and together are fastened to the windscreen (10) by the same encasing arrangement or the same moulding arrangement.

5. Assembly according to one of claims 1 or 2, wherein the intermediate structural element (124, 137) extending along the edge (18) of the windscreen (10) is disposed edge to edge in the extension of the surface thereof, wherein continuity is assured by an element lying flush with these surfaces at least in the zone or zones wiped by the windscreen wipers (129, 130) when these come to a standstill in a resting zone.

6. Assembly according to one of the preceding claims, wherein zones of reduced mechanical resistance (42, 132, 133) intended to facilitate fracture in regulatory conditions to assure safety in the event of "pedestrian impact" are arranged in the fastening means arranged between the edge of the windscreen (10) and the drive mechanisms, said means including in particular the fastening of the drive mechanisms on the intermediate plates, the intermediate plates and the encasing, moulding or gluing arrangement.

7. Assembly according to claim 6, wherein the zones of reduced mechanical resistance are configured on mounts (36) assuring the fastening of the drive mechanisms (32) on the fastening plate (44) by lines of lower thickness (42).

8. Assembly according to one of the preceding claims, wherein the windscreen wipers are positioned when stopped on elements (131, 136) forming resting zones, wherein these elements extend along the edge (18) of the windscreen (10) in the extension of the surface thereof, and these elements (131, 136) comprise zones of reduced mechanical resistance (132, 133) intended to facilitate fracture in regulatory conditions to assure safety in the event of "pedestrian impact".

9. Assembly according to claim 8, wherein the elements forming the resting zone of the windscreen wipers are formed by a sheet (131, 136) that extends over a recess (128) of the intermediate structural element (124) supporting the two plates (44, 44').

10. Assembly according to claim 9, wherein the sheet (131) that extends over the recess (128) is formed by the encasing or moulding material of the intermediate structural element (124) or of the element forming the plate (137), wherein lines of lower thickness (132, 133) of the encasing or moulding material arranged on the circumference of the recess facilitate fracture in the event of "pedestrian impact".

11. Assembly according to claim 9, wherein the sheet located in the recess (128) is formed from a dimensionally rigid material with dimensions corresponding to those of the recess, wherein this sheet (136) is fastened to the intermediate structural element (124, 137) and is held in position in the recess (128) by encasing or moulding.

12. Assembly according to claim 11, wherein the sheet (136) is completely enveloped in the encasing or moulding material, which secures it to the intermediate structural element (124) or to the element forming the plate (137), wherein the latter are fastened by the same material to the edge (18) of the windscreen (10).

13. Assembly according to claim 11, wherein the upper face of the sheet (136) located in the recess (128) forms the zone, on which the windscreen wipers (129, 130) rest when stopped, and said face is in the extension of the upper face of the glazing.

14. Assembly according to claim 13, wherein the face of the sheet (136) is made of a material that has a low friction with respect to the material of the windscreen wipers.

15. Assembly according to claim 14, wherein the sheet (136) is made of glass.

16. Assembly according to one of claims 1 to 7, wherein the windscreen (10) is formed from two sheets of glass assembled by means of a plastic interlayer, wherein the sheet forming the upper face of the glazing projects beyond the sheet of the lower face on the edge (18) of the glazing, to which the intermediate structural element (124, 137) is fastened, said fastening only being made on this upper sheet, wherein this upper sheet has a crumple line essentially along the edge of the lower sheet to facilitate fracture in the event of "pedestrian impact".

17. Fastening of an assembly according to one of the preceding claims, in which the glazing is glued to the body structure of the automobile.

18. Fastening according to claim 17, wherein the intermediate structural element (124, 137) is glued at the same time to the opposing body structural element.

19. Fastening of an assembly according to one of claims 1 to 16, wherein the intermediate structural element (124, 137) is glued at its periphery to the body structure and the glazing itself is glued to the structure, wherein the two operations are conducted in succession.

## Patentansprüche

1. Anordnung, bestehend aus einer Automobil-Windschutzscheibe und wenigstens einem Antriebsmechanismus eines Scheibenwischers der oberen, äußeren Vorderseite der Windschutzscheibe, umfassend eine zwischenliegende Festlegungsplatte, wobei der Antriebsmechanismus auf der zwischenliegenden Festlegungsplatte festgelegt ist, welche mit einem Umfangsteil der Windschutzscheibe einstückig ausgebildet ist, **dadurch gekennzeichnet, daß** sie wenigstens zwei Antriebsmechanismen (32) umfaßt, welche jeweils auf einer gesonderten Platte (44, 44') festgelegt sind, wobei jede Platte auf ein und demselben zwischenliegenden Strukturelement (124, 137) festgelegt ist, welches wenigstens auf einem Teil des Rands der Windschutzscheibe (10), entlang dessen es sich erstreckt, verkapselt bzw. vergossen, ausgegossen oder verklebt ist, wobei die zwischenliegenden Festlegungsplatten selbst auf diesem Strukturelement durch Verkapseln bzw. Vergießen, Ausgießen oder Verkleben festgelegt sind.

2. Anordnung nach Anspruch 1, in welcher das zwischenliegende Strukturelement (124, 137) sich im wesentlichen in einer zur Ebene der Windschutzscheibe parallelen Ebene erstreckt und daß das Umfangsteil (21) der Windschutzscheibe (10) und ein Teil des zwischenliegenden Strukturelements (124, 137) übereinanderliegend angeordnet sind.

3. Anordnung nach Anspruch 1 oder 2, in welcher die zwischenliegenden Festlegungsplatten (44, 44') einen in Umfangsrichtung verlaufenden Befestigungs- bzw. Festlegungsflansch (46) umfassen, mittels welchem die Platte auf dem zwischenliegenden Strukturelement (124) festgelegt ist.

4. Anordnung nach Anspruch 1, in welcher das Strukturelement (124) und die Festlegungsplatten (44, 44') aneinander festgelegt sind und die Gesamtheit an der Windschutzscheibe (10) durch ein und dasselbe Verkapseln oder Vergießen festgelegt ist.

5. Anordnung nach Anspruch 1 oder 2, in welcher das zwischenliegende Strukturelement (124, 137), welches sich entlang des Rands (18) der Windschutzscheibe (10) erstreckt, stumpf in der Verlängerung der Oberfläche der letzteren angeordnet ist, wobei die Kontinuität durch ein in diese Oberflächen bündig eingelassenes Element wenigstens in dem oder den durch die Scheibenwischer (129, 130) überstrichenen Bereich(en) sichergestellt ist, wenn diese in einer Ruhezone angehalten werden.

6. Anordnung nach einem der vorhergehenden Ansprüche, in welcher in den Festlegungselementen, welche zwischen dem Rand der Windschutzscheibe (10) und dem Antriebsmechanismus angeordnet sind, Mittel, umfassend insbesondere die Festlegung des Antriebsmechanismus auf den zwischenliegenden Platten, die zwischenliegenden Platten und das Verkapseln, Vergießen oder Verkleben, in den Bereichen mit reduziertem, mechanischem Widerstand (42, 132, 133) angeordnet sind, welche dazu bestimmt sind, den Bruch bzw. ein Brechen unter den Bedingungen, welche zur Gewährleistung der Sicherheit beim « Fußgängeraufprall » bestimmt sind, zu erleichtern.

7. Anordnung nach Anspruch 6, in welcher die Bereiche mit reduziertem, mechanischem Widerstand auf Klauen (36) ausgebildet sind, welche die Festlegung der Antriebsmechanismen (32) auf der Festlegungsplatte (44) durch Linien bzw. Bereiche verringerter Dicke (42) sicherstellen.

8. Anordnung nach einem der vorhergehenden Ansprüche, in welcher die Scheibenwischer im Haltezustand auf Elementen (131, 136), welche Ruhezonen bilden, positioniert sind, welche Elemente sich entlang des Rands (18) der Windschutzscheibe (10) in der Verlängerung der Oberfläche derselben erstrecken, welche Elemente (131, 136) Bereiche mit reduziertem, mechanischem Widerstand (132, 133) umfassen, welche dazu bestimmt sind, den Bruch unter reglementierten Bedingungen, welche die Sicherheit beim « Fußgängeraufprall » sicherstellen, zu erleichtern.

9. Anordnung nach Anspruch 8, in welcher die Elemente, welche die Ruhezone des Scheibenwischers ausbilden, aus einem Blatt (131, 136) gebildet sind, welches sich auf einer Ausnehmung (128) des zwischenliegenden Strukturelements (124), welches die zwei Platten (44, 44') trägt, erstreckt.

10. Anordnung nach Anspruch 9, in welcher das Blatt (131), welches sich auf der Ausnehmung (128) erstreckt, durch Verkapselung oder Vergießen des zwischenliegenden Strukturelements (124) oder des die Platte (137) ausbildenden Elements gebildet ist, wobei Linien bzw. Bereiche verringerter Dicke (132, 133) des Verkapselungsmaterials oder des Vergußmaterials auf dem Umfang der Ausnehmung angeordnet sind, um den Bruch beim « Fußgängeraufprall » zu erleichtern.

11. Anordnung nach Anspruch 9, in welcher das in der Ausnehmung (128) angeordnete Blatt aus einem steifen Material, welches in der Form und den Abmessungen mit jenen der Ausnehmung übereinstimmt, ausgebildet ist, welches Blatt (136) auf dem zwischenliegenden Strukturelement (124, 137) festgelegt ist und in der Ausnehmung (128) durch das Verkapseln oder Vergießen in Position gehalten ist.

12. Anordnung nach Anspruch 11, in welcher das Blatt (136) vollständig von dem Verkapselungs- oder Vergußmaterial umhüllt bzw. in dieses eingebettet ist, welches es an dem zwischenliegenden Strukturelement (124) oder an dem die Platte ausbildenden Element (137) festlegt, welche letzteren durch dasselbe Material an dem Rand (18) der Windschutzscheibe (10) festgelegt sind.

13. Anordnung nach Anspruch 11, in welcher die obere Vorderseite des Blatts (136), die in der Ausnehmung (128) angeordnet ist, den Bereich ausbildet, auf welchem die Scheibenwischer (129, 130) im Anhaltefall aufruhen bzw. aufliegen, wobei die Vorderseite in der Verlängerung der oberen Vorderseite der Verglasung bzw. Glasscheibe angeordnet ist.

14. Anordnung nach Anspruch 13, in welcher die Vorderseite bzw. Außenseite des Blatts (136) aus einem Material gebildet ist, welches eine geringe Reibung mit dem Material der Scheibenwischer aufweist.

15. Anordnung nach Anspruch 14, in welcher das Blatt (136) aus Glas ist.

16. Anordnung nach einem der Ansprüche 1 bis 7, in welcher die Windschutzscheibe (10) aus zwei Glasscheiben gebildet ist, welche mittels einer Kunststoffzwischenlage zusammengefügt sind, wobei das Blatt, welches die Vorderseite bzw. Außenseite der Verglasung ausbildet, in das Blatt der unteren Seite an dem Rand (18) der Verglasung übergeht, auf welchem das zwischenliegende Strukturelement (124, 137) festgelegt ist, wobei die Festlegung nur auf diesem oberen Blatt ausgebildet ist, welches obere Blatt eine Schwächungslinie im wesentlichen entlang des Rands des unteren Blatts zur Erleichterung des Bruchs beim « Fußgängeraufprall » aufweist.

17. Festlegung einer Anordnung nach einem der vorhergehenden Ansprüche, in welcher die Verglasung auf der Karosseriestruktur des Autos festgeklebt ist.

18. Festlegung nach Anspruch 17, in welcher gleichzeitig das zwischenliegende Strukturelement (124, 137) an dem gegenüberliegenden Karosserieelement festgeklebt ist.

19. Festlegung nach einem der Ansprüche 1 bis 16, in welcher das zwischenliegende Strukturelement (124, 137) an seinem Umfang an der Karosseriestruktur festgeklebt ist und die Verglasung selbst an der Struktur festgelegt ist, welche zwei Arbeitsgänge aufeinanderfolgend ausgeführt werden.
